# EUROPÄISCHE PATENTSCHRIFT

(11) **EP 0 301 406 B1**
(45) Veröffentlichungstag und Bekanntmachung des Hinweises auf die Patenterteilung: **22.09.1993**
(21) Anmeldenummer: 88111752.7
(22) Anmeldetag: 21.07.1988
(51) Int. Cl.: C14C 3/04, C14C 3/28, C14C 3/18

(54) **Gerbereihilfsmittel, dessen Verwendung und Verfahren zum Gerben von Leder**
Tanning adjuvant, its use and method of tanning leather
Adjuvant de tannage, son utilisation et procédé de tannage du cuir

(30) Priorität: 28.07.1987 DE 3724868
(43) Veröffentlichungstag der Anmeldung: 01.02.1989
(73) Patentinhaber: BASF Aktiengesellschaft, 67063 Ludwigshafen (DE)
(72) Erfinder: Ebel, Klaus, Dr., D-6704 Mutterstadt (DE); Reuther, Wolfgang, Dr., D-6900 Heidelberg (DE); Fikentscher, Rolf, Dr., D-6700 Ludwigshafen (DE); Lach, Dietrich, Dr., D-6701 Friedelsheim (DE); Streicher, Rolf, D-6520 Worms 1 (DE); Schaffer, Ortwin, Dr., D-6700 Ludwigshafen (DE)

(56) Entgegenhaltungen:
- US-A- 2 997 363
- US-A- 4 625 029

## Beschreibung

Die Erfindung betrifft ein Gerbereihilfsmittel, erhalten durch Kondensation von Melamin mit Glyoxal und/oder Glyoxylsäure und gegebenenfalls mit einer aromatischen Verbindung, die eine phenolische Hydroxlgruppe aufweist, oder gegebenenfalls mit einer kondensierbaren Stickstoffverbindung, dessen Herstellung und Verwendung sowie ein Verfahren zum Gerben mit diesem Kondensationsprodukt in Kombination insbesondere mit Aluminiumgerbstoffen.

Die Chromgerbung stellt eines der wichtigsten Gerbeverfahren dar. Es besteht jedoch ein zunehmendes Interesse an chromfreien mineralischen Gerbverfahren, beispielsweise wegen des Problems der Beseitigung chromhaltigen Abwassers. Anstelle von Chromverbindungen bieten sich beispielsweise Aluminium-, Titan- oder Zirkonverbindungen in Form ihrer Salze an. Jedoch werden insbesondere bei der alleinigen Verwendung von Aluminiumverbindungen ungenügende Schrumpfungstemperaturen des erhaltenen Leders erreicht. In der Regel sind Schrumpfungstemperaturen von 90 möglichst um 100°C wünschenswert. Weiterhin ist meist eine relativ leichte Auswaschbarkeit von Aluminiumgerbstoffen, d.h. eine begrenzte Wasserbeständigkeit des Leders, nachteilig.

Im J. Amer. Leather Chem. Assoc. 76 (1981), Seiten 230-244, wird die Kombination von Mimosa-Extrakt mit Aluminiumverbindungen als Alternative zur Chromgerbung beschrieben. Nachteilig an diesem Gerbeverfahren ist die durch Mimosa-Extrakt erhaltene Brauntönung des Leders sowie eine ungenügende Lichtechtheit der gegerbten Leder.

Die Kondensation von Melamin mit den verschiedensten Aldehyden ist schon lange bekannt, beispielsweise die Umsetzung von Melamin mit Glyoxal und anschließend Formaldehyd zu einem Textilhilfsmittel gemäß US-PS 2 574 114. Kondensate des Melamins mit Glyoxylsäure und Glyoxal, gegebenenfalls mit einer Verbindung mit penolischen Hydroxylgruppen oder gegebenenfalls mit Amiden, Imiden oder Aminen, sind bislang noch nicht bekannt.

Aufgabe der vorliegenden Erfindung ist es, einen Gerbstoff oder ein Gerbereihilfsmittel für ein chromfreies Gerbeverfahren zur Verfügung zu stellen, bei dem die Nachteile der mangelnden Lichtechtheiten und Braunfärbung der Mimosa-Aluminium-Gerbung vermieden werden.

Die Lösung der Aufgabe besteht in einem Verfahren zum Gerben von Leder mit einem Gerbereihilfsmittel auf Basis eines Kondensationsproduktes aus Melamin mit Glyoxal und/oder Glyoxylsäure und gegebenenfalls einer aromatischen Verbindung mit mindestens einer phenolischen Hydroxylgruppe oder gegebenenfalls einer kondensierbaren Verbindung mit einer reaktiven stickstoffhaltigen Gruppe, der Herstellung und der Verwendung dieses Gerbereihilfsmittels zusammen mit chromfreien Mineralgerbstoffen.

Gegenstand der vorliegenden Erfindung ist ein Verfahren zum Gerben von Leder in wäßrigen Flotten, bei dem man die gepickelten Blößen mit einem Kondensationsprodukt aus Melamin und Glyoxal und/oder Glyoxylsäure gegebenenfalls in Form eines Alkalisalzes und gegebenenfalls einer aromatischen Verbindung mit mindestens einer phenolischen Hydroxylgruppe ausgewählt aus einer Gruppe, bestehend aus Phenolsulfonsäure, Sulfosalicylsäure, Salicylsäure oder 8-Hydroxichinolin, oder gegebenenfalls einer kondensierbaren Verbindung mit einer reaktiven stickstoffhaltigen Gruppe in einer Menge von 4 bis 20 Gew.%, bezogen auf das Blößengewicht, bei Temperaturen von 20 bis 50°C und anschließend mit einer Aluminium-, Zirkon- oder Titanverbindung als mineralischem Gerbstoff in einer Menge von 4 bis 16 Gew.%, bezogen auf das Blößengewicht, bei Temperaturen von 20 bis 45°C behandelt, wobei die erste und zweite Stufe miteinander vertauscht sein können.

Das erfindungsgemäße Verfahren führt zu einem Leder mit hohen Schrumpfungstemperaturen von 90 bis 98°C. Die Farbe des Leders ist gegenüber der bekannten braunen Mimosa-Aluminium-Gerbung elfenbeinfarbig bis weiß, und das Leder weist eine sehr gute Lichtechtheit auf. Ein weiterer Vorteil ist, daß die helle Eigenfarbe auch bei längerer Lagerung bei höheren Temperaturen von beispielsweise 60 bis 80°C unverändert bleibt.

Im folgenden wird hierzu näher erläutert:
Ausgangsmaterial sind üblicherweise gepickelte Blößen, beispielsweise Rindsblößen mit Spaltstärken von 1,5 bis 4 mm.

Die wäßrige Flotte des Pickelbades wird zweckmäßigerweise mit Flottenlängen von 30 bis 200%, bevorzugt 50 bis 100%, angewandt.

Die in dem erfindungsgemäßen Verfahren zur Verwendung kommenden Kondensationsprodukte werden erhalten durch Kondensation von 1 Mol Melamin mit 1 bis 8 Mol, bevorzugt 2 bis 6 Mol, Glyoxylsäure gegebenenfalls in Form eines Alkalisalzes und/oder 1 bis 8 Mol, bevorzugt 2 bis 6 Mol, Glyoxal, wobei die Summe der Mole von Glyoxylsäure und Glyoxal 4 bis 9, vorzugsweise 5 bis 7 beträgt, in wäßriger Lösung bei Temperaturen von 20 bis 100, bevorzugt 40 bis 90°C.

Bei der Kondensation von Melamin mit Glyoxal erhält man durch einfaches Erwärmen, bevorzugt auf Temperaturen von 40 bis 80°C, klare flüssige Harzlösungen, wenn pro Mol Melamin mehr als 5 Mol, insbesondere 5,1 bis 8 Mol, verwendet werden.

Bei geringeren Mengen an Glyoxal, d.h. pro Mol Melamin 5 Mol Glyoxal und weniger, insbesondere 1 bis 5 Mol, werden die Harzlösungen nach kurzer Zeit fest. Für diesen Fall lassen sich lösliche Harzlösungen herstellen, wenn die Kondensation in Gegenwart von 0,1 bis 2,0 Val einer starken bis mittelstarken Protonensäure pro Mol Melamin durchgeführt wird. Zweckmäßige Protonensäuren sind beispielsweise Salzsäure, Schwefelsäure, Phosphorsäure, Toluolsulfonsäure, Ameisensäure, Essigsäure u.a.

Die Kondensation von Melamin mit Glyoxylsäure wird mit Glyoxylsäure oder einem Alkalisalz, insbesondere dem Natriumsalz der Glyoxylsäure, durch Erwärmen bevorzugt auf Temperaturen von 50 bis 90°C durchgeführt. Es können auch Mischungen von Glyoxylsäure und einem Alkalisalz verwendet werden.

Es werden stets klare, mit Wasser verdünnbare Lösungen erhalten.

Besonders bevorzugte Kondensationsprodukte werden erhalten durch Kondensation von 1 Mol Melamin mit 1 bis 5 Mol, bevorzugt 2 bis 4 Mol, Glyoxylsäure oder einem Alkalisalz der Glyoxylsäure und 1 bis 5 Mol, bevorzugt 2 bis 4 Mol, Glyoxal, wobei die Summe der Mole von Glyoxylsäure oder ihrem Alkalisalz und Glyoxal 5 bis 7, bevorzugt 5,5 bis 6,5, beträgt, in wäßriger Lösung bei Temperaturen von 20 bis 100°C, bevorzugt 40 bis 80°C, wobei zuerst die gesamte Menge Glyoxylsäure oder ihr Alkalisalz umgesetzt werden und anschließend unter den gleichen Bedingungen das Glyoxal umgesetzt wird.

Auch hierbei können Mischungen von Glyoxylsäure und einem Alkalisalz davon eingesetzt werden.

Nach diesem Verfahren werden stets klare, mit Wasser verdünnbare Lösungen von Melamin-Glyoxylsäure-Glyoxal-Harzen erhalten.

Wie aus den Beispielen hervorgeht, kann dem Kondensationsprodukt aus 1 Mol Melamin, 3 Mol Glyoxylsäure bzw. Glyoxylsäurenatriumsalz und 3 Mol Glyoxal eine genaue Struktur zugeschrieben werden. Weitere bevorzugte Verbindungen sind das Kondensationsprodukt mit den Molverhältnissen 1:2:4 und das mit 1:4:2.

Die Kondensationsprodukte aus Melamin, Glyoxylsäure und Glyoxal sind noch nicht beschrieben worden. Gegenstand der Anmeldung sind daher auch diese Kondensationsprodukte.

Bei den oben beschriebenen Kondensationsreaktionen werden in der Regel 10 bis 80 gew.%ige, bevorzugt 30 bis 60 gew.%ige, wäßrige Lösungen der Ausgangsstoffe unter Rühren umgesetzt. Die erhaltenen Lösungen, zweckmäßigerweise mit eingestellten Feststoffgehalten von 10 bis 80, bevorzugt 30 bis 60 Gew.%, können direkt der praktischen Verwendung zugeführt werden. Die Kondensationsreaktionen sind innerhalb der angegebenen Temperaturbereiche meist innerhalb von 10 bis 60 Minuten beendet.

Nach üblichem Verfahren, wie Abdestillieren des Wassers oder beispielsweise durch Sprühtrocknung, können die Kondensationsprodukte in Pulverform erhalten werden.

In weiterer Ausgestaltung des erfindungsgemäßen Verfahrens können die obengenannten Melamin-Glyoxal- und Melamin-Glyoxylsäure-Glyoxalkondensate durch Einkondensation einer weiteren kondensierbaren Verbindung modifiziert werden, indem 0,1 bis 3,0 Mol, bezogen auf 1 Mol Melamin, einer kondensierbaren Verbindung direkt bei der Herstellung im Gemisch mit Melamin oder mit einer auskondensierten Lösung unter den oben genannten Bedingungen, gegebenenfalls in Gegenwart eines sauren Katalysators, beispielsweise einer der obengenannten Protonensäuren, umgesetzt werden.

Zweckmäßigerweise überschreitet die molare Menge der zusätzlich einkondensierten Verbindung nicht die molare Menge der vorliegenden Aldehydgruppen.

Bevorzugt einkondensierbare Verbindungen mit einer phenolischen Hydroxylgruppe sind Phenolsulfonsäure, Sulfosalicylsäure, Salicylsäure und 8-Hydroxichinolin. Phenolsulfonsäure und Sulfosalicylsäure können dabei in Form der von der Herstellung her technischen Gemische verwendet werden. Der Reaktionsverlauf bzw. das Ende der Reaktion mit den phenolischen Verbindungen kann in einfacher Weise dünnschichtchromatographisch verfolgt werden.

Beispiele für Verbindungen mit einer kondensierbaren reaktiven stickstoffhaltigen Gruppe sind Carbonsäure- und Sulfonsäureamide, Imide, Harnstoffe, Amino- und Iminosäuren sowie Dialkyl- und Dialkanolamine. Davon seien beispielsweise genannt:
Acetamid, Benzoesäureamid, Formamid, Amidosulfonsäure, Succinimid, Glycin, Iminodiessigsäure, Phenylglycin, Harnstoff, Dicyandiamid, Diethanolamin oder Diethylamin. Saure Verbindungen können dabei in Form ihrer Alkalisalze einkondensiert werden.

Davon ist das Acetamid besonders bevorzugt.

Die erfindungsgemäß zu verwendenden Kondensationsprodukte werden in üblicher Weise dem Pickelbad zugesetzt. Bei dem erfindungsgemäßen Gerbverfahren werden zweckmäßigerweise in der ersten Stufe pH-Werte von 2 bis 5, bevorzugt 2,5 bis 4,0 eingehalten. Die Einstellung des pH-Wertes kann durch Zusatz von beispielsweise Natriumbicarbonat erfolgen.

In der Regel wird das Kondensationsprodukt in zwei Anteilen zugegeben und es wird insgesamt 1 bis 18 Stunden gewalkt.

In der zweiten Stufe werden als mineralische Gerbstoffe insbesondere handelsübliches Aluminiumsulfat oder handelsübliches basisches Aluminiumchlorid beispielsweise mit einer Basizität von ca. 65 % und einem Aluminiumoxidgehalt von 22 bis 23 % oder einer Basizität von ca. 20 % und einem Aluminiumoxidgehalt von 16 bis 18 % verwendet.

Diese werden zweckmäßig in einer Menge von 4 bis 16, bevorzugt 6 bis 12 %, bezogen auf Blößengewicht, zugegeben.

Es wird bei Temperaturen von 20 bis 45°C, bevorzugt 30 bis 40°C 1 bis 18 Stunden, bevorzugt 4 bis 14 Stunden, gewalkt.

Beim Einwalken der mineralischen Gerbstoffe sind pH-Werte zwischen 2,0 bis 4, bevorzugt 3,0 bis 4,0, zweckmäßig. Am Ende der Einarbeitung des Mineralgerbstoffs wird der pH-Wert in der Regel durch Zusatz von Natriumformiat, Natriumacetat, Natriumbicarbonat oder Magnesiumoxid auf 4,5 bis 6, bevorzugt 4,5 bis 5,5, eingestellt.

Bei der Verwendung von Zirkonsalzen werden in der Regel pH-Werte von nicht höher als 2,5 eingehalten.

Wie oben erwähnt, können die beiden Gerbstufen in ihrer Reihenfolge vertauscht werden.

Die Erfindung wird durch die folgenden Beispiele näher erläutert: Die in den Beispielen angegebenen Teile sind Gewichtsteile. Die Prozentangaben beziehen sich auf das Gewicht.

### Anwendungsbeispiele

### Anwendungsbeispiel 1

100 Teile Rindsblöße (Spaltstärke 2,0 mm) werden in einem Pickelbad aus 60 Teilen Wasser, 6 Teilen Natriumchlorid, 0,6 Teilen Ameisensäure und 0,6 Teilen Schwefelsäure 60 Minuten lang behandelt. Bei Raumtemperatur gibt man zu diesem Pickelbad in 90-minütigem Abstand in zwei Anteilen eine Lösung von 25 Teilen des 40%igen Kondensationsproduktes aus Herstellungsbeispiel 9, welche bei pH-Wert 4 mit 75 Teilen Wasser verdünnt wurde, und walkt nochmals 90 Minuten. Anschließend werden der Flotte 10 Teile eines handelsüblichen Aluminiumchloridgerbstoffes (Basizität 20%; Al₂O₃-Gehalt 16-18%) zugesetzt und über Nacht bewegt. Am anderen Morgen beträgt der pH-Wert der Flotte 2,9 bis 3. Man fügt 2 Teile Natriumacetat zu und walkt 60 Minuten weiter. Danach wird die Temperatur auf 40°C erhöht und durch portionsweise Zugabe von insgesamt 1,8 Teilen Magnesiumoxid der pH-Wert der Flotte im Verlauf von 6 Stunden auf 5,6 gestellt. Die Leder werden über Nacht gelagert. Anschließend wird in 100 Teilen frischer Flotte gefettet, abgesäuert und fertiggestellt. Das Leder weist eine Schrumpftemperatur von 94°C auf, ist weiß und sehr weich. Es zeichnet sich durch hervorragende Lichtechtheit und Wärmeresistenz aus.

### Anwendungsbeispiel 2

Zu 100 Teilen gepickelter Rindsblöße in 60 Teilen Pickelflotte gemäß Anwendungsbeispiel 1 gibt man 10 Teile eines handelsüblichen Aluminiumchloridgerbstoffes (Basizität 20%; Al₂O₃-Gehalt 16-18%) und läßt 4 Std. bei Raumtemperatur (25°C) einwalken. Danach setzt man im Abstand von 90 Minuten in zwei Anteilen eine Lösung von 25 Teilen des 40%igen Kondensationsproduktes aus Herstellungsbeispiel 9, welches bei pH-Wert 4 mit 75 Teilen Wasser verdünnt wurde, zu und bewegt über Nacht. Man erhält am anderen Morgen einen pH-Wert von 3 in der Flotte. Mit 2 Teilen Natriumacetat stellt man auf pH 3,3 und walkt 60 Minuten. Anschließend wird mit 1,8 Teilen Magnesiumoxid im Verlauf von 6 Stunden auf pH 5,8 gestellt; man arbeitet dabei bei 40°C. Die Leder werden wie üblich fertiggestellt. Sie weisen nach der Fettung eine Schrumpftemperatur von 90°C auf, sind weich und weiß und zeigen gute Resistenz gegen Licht- und Wärmeeinwirkung.

### Anwendungsbeispiel 3

Verwendet man anstelle des in Anwendungsbeispiel 1 genannten Kondensationsproduktes gleiche Teile des Kondensationsproduktes aus Herstellungsbeispiel 12, so erhält man ähnlich weiße und weiche Leder. Sie weisen eine geringfügige niedere Schrumpftemperatur von 92°C auf. Die Leder zeichnen sich auch hier durch gute Lichtechtheit und Wärmeresistenz aus.

### Anwendungsbeispiel 4

Verwendet man anstelle der in Anwendungsbeispiel 1 genannten 1,8 Teile Magnesiumoxid nur 1,1 Teile, so erhält man einen End-pH-Wert von 4,2. Die Leder zeigen eine Schrumpftemperatur von 94°C, sind weich und weiß und weisen sehr gute Lichtechtheit und Wärmeresistenz auf.

### Anwendungsbeispiel 5

100 Teile gepickelter Rindblöße gemäß Anwendungsbeispiel 1 werden in einem Walkfaß in 60 Teile Pickelflotte gegeben. Dazu fügt man in 90-minütigem Abstand in zwei Anteilen eine Lösung von 20 Teilen des Kondensationsproduktes aus Herstellungsbeispiel 9, welche bei pH-Wert 4 mit 75 Teilen Wasser verdünnt wurde, und walkt jeweils 90 Minuten. Anschließend setzt man 6 Teile des in Anwendungsbeispiel 1 genannten Aluminiumgerbstoffes zu und bewegt über Nacht. Am anderen Morgen zeigt die Flotte einen pH-Wert von 3,1. Nach Zugabe von 2 Teilen Natriumacetat erreicht man nach 60 Minuten pH 3,5. Bei 40°C werden im Verlauf von insgesamt 6 Stunden 1,1 Teile Magnesiumoxid und 0,4 Teile Natriumbicarbonat zugegeben. Der Flotten-End-pH-Wert beträgt 5,4. Die Leder werden wie üblich fertiggestellt. Sie weisen nach der Fettung eine Schrumpftemperatur von 90°C auf, sind weiß und weich und zeigen gute Resistenz gegen Licht- und Wärmeeinwirkung.

### Anwendungsbeispiel 6

Anstelle des in Anwendungsbeispiel 1 genannten Aluminiumgerbstoffes werden 8 Teile eines anderen handelsüblichen Aluminiumgerbstoffes (Basizität 65%; Al₂O₃-Gehalt 22 bis 23%) verwendet. Die damit gefertigten Leder weisen nach der Fettung eine Schrumpftemperatur von 94°C auf, sind weiß und weich und zeigen gute Lichtechtheit und Wärmeresistenz.

### Anwendungsbeispiel 7

Verwendet man anstelle des in Anwendungsbeispiel 1 genannten Kondensationsproduktes aus Herstellungsbeispiel 9 gleiche Teile des Kondensationsproduktes aus Herstellungsbeispiel 23, so weisen die Leder nach der Fettung eine Schrumpfungstemperatur von 92°C auf. Sie zeichnen sich durch gute Lichtechtheit und Wärmeresistenz aus.

### Anwendungsbeispiel 8

Verwendet man anstelle der in Anwendungsbeispiel 1 genannten 1,8 Teile Magnesiumoxid im gleichen Zeitraum 6 Teile Natriumbicarbonat und arbeitet bei Raumtemperatur (25°C), so erhält man einen End-pH-Wert von 5,5. Die Leder weisen nach der Fettung eine Schrumpfungstemperatur von 92°C auf und zeigen gute Resistenz gegen Licht- und Wärmeeinwirkung.

### Herstellungsbeispiele

### Beispiel 1

Man erwärmt eine Mischung von 193,0 g 40%iger wäßriger Glyoxallösung (1,33 mol) und 21,0 g Melamin (0,17 mol) 15 min auf 40°C, wobei eine klare Lösung entsteht. Anschließend wird abgekühlt und mit 31,5 g Wasser auf einen Feststoffgehalt von ber. 40% eingestellt.

### Beispiele 2 - 5

Nach der gleichen Verfahrensweise wie in Beispiel 1 werden Produkte mit unterschiedlichem Molverhältnis von Melamin zu Glyoxal hergestellt:

| Beispiel | Melamin | | Glyoxal 40%ig | | Wasser | Produkt |
|---|---|---|---|---|---|---|
| | (g) | (mol) | (g) | (mol) | (g) | |
| 2 | 25,2 | 0,20 | 203,0 | 1,40 | 37,8 | klare Harzlösung |
| 3 | 31,5 | 0,25 | 217,5 | 1,50 | 47,0 | klare Harzlösung |
| 4 | 35,0 | 0,28 | 222,0 | 1,53 | 52,5 | klare Harzlösung |
| 5 | 41,0 | 0,33 | 242,0 | 1,67 | 63,0 | zunächst klare Lösung, die jedoch nach kurzer Zeit zu einem farblosen Feststoff erstarrte. |

### Beispiel 6

Man erhitzt eine Mischung von 49,7 g Melamin (0,39 mol) und 350,3 g 50%iger wäßriger Glyoxylsäurelösung (2,37 mol) 30 min auf 70 °C, wobei eine klare Harzlösung entsteht.

### Beispiel 7

Man erhitzt eine Mischung von 63,0 g Melamin (0,5 mol) und 288,0 g Glyoxylsäure-Natriumsalz (3,0 mol) in 211 ml Wasser 30 min auf 90°C, wobei eine klare Lösung entsteht.

### Beispiel 8

Man erhitzt eine Mischung von 42,0 g Melamin (0,33 mol), und 148,0 g 50%ige wäßrige Glyoxylsäurelösung (1,0 mol) 10 min auf 70°C und kühlt die klare Lösung auf Raumtemperatur ab. Anschließend werden 108,8 g 40%ige wäßrige Glyoxallösung (0,75 mol) zugegeben und 15 min auf 40°C erwärmt, wobei eine klare wasserverdünnbare Harzlösung entsteht.

### Beispiel 9

177,6 g 50%ige wäßrige Glyoxylsäurelösung (1,2 mol) werden mit 96,0 g 50%iger Natronlauge (1,2 mol) zum Glyoxylsäure-Natriumsalz umgesetzt. Anschließend werden 50,4 g Melamin (0,4 mol) und 94 g Wasser zugegeben und 15 min auf 60°C erhitzt. Zu der so erhaltenen klaren Lösung gibt man bei Raumtemperatur 174,0 g 40%ige wäßrige Glyoxallösung (1,2 mol) und erwärmt noch 15 min auf 40°C.

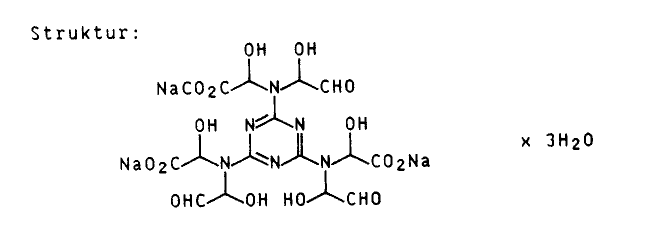

Nach der Analyse des sprühgetrockneten Produkts sind die drei Aldehydgruppen hydratisiert. Summenformel C₁₅H₂₁N₆O₁₈Na₃

| Analyse: | C | H | N | O | Na |
|---|---|---|---|---|---|
| gefunden | 28,8 | 3,2 | 12,7 | 44,7 | 11,0 |
| berechnet | 28,1 | 3,3 | 13,1 | 44,8 | 10,7 |

### Beispiele 10 - 15

Nach der gleichen Verfahrensweise wie in Beispiel 9 werden Produkte mit unterschiedlichen Molverhältnissen von Melamin : Glyoxylsäure : Glyoxal hergestellt:

| Beispiel | Melamin | | Glyoxalsäure 50%ig | | Natronlauge 50%ig | | Wasser | Glyoxal 40%ig | |
|---|---|---|---|---|---|---|---|---|---|
| | (g) | (mol) | (g) | (mol) | (g) | (mol) | (g) | (g) | (mol) |
| 10 | 31,5 | 0,25 | 37,0 | 0,25 | 18,0 | 0,23 | 57,0 | 181,3 | 1,25 |
| 11 | 31,5 | 0,25 | 74,0 | 0,50 | 36,0 | 0,45 | 67,0 | 145,0 | 1,00 |
| 12 | 31,5 | 0,25 | 148,0 | 1,00 | 72,0 | 0,90 | 86,3 | 72,5 | 0,50 |
| 13 | 31,5 | 0,25 | 185,0 | 1,25 | 90,0 | 1,13 | 96,0 | 36,3 | 0,25 |
| 14 | 31,5 | 0,25 | 111,0 | 0,75 | 54,0 | 0,68 | 76,3 | 72,5 | 0,50 |
| 15 | 31,5 | 0,25 | 111,0 | 0,75 | 54,0 | 0,68 | 76,3 | 36,3 | 0,25 |

### Beispiel 16

36,4 g Amidosulfonsäure (0,38 mol) werden in 77,0 g Wasser suspendiert und 30,0 g 50%ige Natronlauge (0,38 mol) zugetropft. Dann werden 15,8 g Melamin (0,13 mol) und 109,0 g 40%ige wäßrige Glyoxallösung zugegeben und 35 min auf 60°C erhitzt. Man erhält eine klare Harzlösung, die auch beim Ansäuern klar bleibt.

### Beispiele 17 - 19

Nach der gleichen Verfahrensweise wie in Beispiel 16 werden mit unterschiedlichen Molverhältnissen von Melamin : Amidosulfonsäure : Glyoxal ebenfalls klare auch bei saurem pH-Wert stabile und wasserverdünnbare Harzlösungen hergestellt:

| Beispiel | Melamin | | Amidosulfonsäure | | Natronlauge 50%ig | | Wasser | Glyoxal 40%ig | |
|---|---|---|---|---|---|---|---|---|---|
| | (g) | (mol) | (g) | (mol) | (g) | (mol) | (g) | (g) | (mol) |
| 17 | 15,8 | 0,13 | 30,3 | 0,31 | 25,0 | 0,31 | 75,0 | 91,0 | 0,63 |
| 18 | 31,5 | 0,25 | 48,5 | 0,50 | 40,0 | 0,50 | 120,0 | 145,0 | 1,00 |
| 19 | 31,5 | 0,25 | 48,5 | 0,50 | 40,0 | 0,50 | 120,0 | 109,0 | 0,75 |

### Beispiele 20 - 32

Die angegebene Menge einer 40%igen wäßrigen Melamin-Glyoxal-Harzlösung aus Beispiel 3 wird 20 min mit der angegebenen Menge des Amids, Amins oder Imids bei 40°C kondensiert. Man erhält farblose bis schwach gelb gefärbte Harzlösungen.

| Beispiel | Melamin-Glyoxal-Harz aus Beisp.3 | | einkondensiertes Amid | |
|---|---|---|---|---|
| | (g) | (mol, bezogen auf Melamin) | (g) | (mol) |
| 20 | 237,8 | 0,2 | 30,3 | 0,2 Phenylglycin |
| 21 | 237,8 | 0,2 | 26,6 | 0,2 Iminodiessigsäure |
| 22 | 237,8 | 0,2 | 19,8 | 0,2 Succinimid |
| 23 | 237,8 | 0,2 | 11,8 | 0,2 Acetamid |
| 24 | 237,8 | 0,2 | 35,4 | 0,6 Acetamid |
| 25 | 237,8 | 0,2 | 27,0 | 0,6 Formamid |
| 26 | 237,8 | 0,2 | 15,0 | 0,2 Glycin |
| 27 | 237,8 | 0,2 | 11,4 | 0,2 Harnstoff |
| 28 | 237,8 | 0,2 | 16,8 | 0,2 Dicyandiamid |
| 29 | 237,8 | 0,2 | 50,4 | 0,2 Dicyandiamid |
| 30 | 237,8 | 0,2 | 63,1 | 0,6 Diethanolamin |
| 31 | 237,8 | 0,2 | 21,0 | 0,2 Diethanolamin |
| 32 | 278,8 | 0,2 | 43,9 | 0,6 Diethylamin |

Diethanolamin und Diethylamin werden als 40%ige Lösung ihrer Hydrochloride in Wasser bei Raumtemperatur zugegeben (Beispiele 30 bis 32).

### Beispiele 33 - 35

Die angegebene Menge einer 40%igen wäßrigen Melamin-Glyoxalharzlösung aus Beispiel 3 wird bei 70 - 90°C bis zum vollständigen Umsatz des Phenolderivates gerührt (dünnschichtchromatographische Kontrolle). Man erhielt gelb bis braun gefärbte Harzlösungen.

| Beispiel | Melamin-Glyoxal-Harz aus Beisp.3 | | einkondensiertes Phenolderivat | |
|---|---|---|---|---|
| | (g) | (mol, bezogen auf Melamin) | (g) | (mol) |
| 33 | 237,8 | 0,2 | 161,6 | 0,6 Phenolsulfonsäure |
| 34 | 237,8 | 0,2 | 131,2 | 0,6 Sulfosalicylsäure |
| 35 | 237,8 | 0,2 | 87,0 | 0,6 8-Hydroxichinolin |

### Beispiel 36

Man erhitzt 42,0 g (0,33 mol) Melamin, 242,0 g (1,67 mol) 40%ige wäßrige Glyoxallösung, 15,3 g (0,33 mol) Ameisensäure und 9,0 g Wasser unter Rühren 25 min auf 70°C. Nach dem Abkühlen wird eine klare, schwach gelbe unendlich wasserverdünnbare Harzlösung erhalten.

### Beispiele 37 - 43

Analog Beispiel 36 werden Harzlösungen mit unterschiedlichen Molverhältnissen der Einsatzstoffe hergestellt:

| Beispiel | Melamin | | Glyoxal 40%ig | | Wasser | Säure | |
|---|---|---|---|---|---|---|---|
| | (g) | (mol) | (g) | (mol) | (g) | (g) | (mol) |
| 37 | 50,4 | 0,40 | 232,0 | 1,60 | 22,5 | 18,4 | 0,40 Ameisensäure |
| 38 | 126,0 | 1,00 | 435,0 | 3,00 | 62,0 | 23,0 | 0,50 Ameisensäure |
| 39 | 126,0 | 1,00 | 290,0 | 2,00 | 114,0 | 46,0 | 1,00 Ameisensäure |
| 40 | 31,5 | 0,25 | 35,8 | 0,25 | 36,0 | 12,0 | 0,25 Ameisensäure |
| 41 | 189,0 | 1,50 | 654,0 | 4,50 | 0 | 150,0 | 1,50 konz. HCl |
| 42 | 210,0 | 1,67 | 725,0 | 5,00 | 0 | 83,5 | 0,84 konz. H₂SO₄ |
| 43 | 188,8 | 1,50 | 732,0 | 5,05 | 0 | 90,4 | 1,00 Oxalsäure |

## Patentansprüche

1. Verfahren zum Gerben von Leder in wäßrigen Flotten, dadurch gekennzeichnet, daß man die gepickelten Blößen mit einem Kondensationsprodukt aus Melamin und Glyoxal und/oder Glyoxylsäure gegebenenfalls in Form eines Alkalisalzes und gegebenenfalls einer aromatischen Verbindung mit mindestens einer phenolischen Hydroxylgruppe oder gegebenenfalls einer kondensierbaren Verbindung mit einer reaktiven stickstoffhaltigen Gruppe in einer Menge von 4 bis 20 Gew.%, bezogen auf das Blößengewicht, bei Temperaturen von 20 bis 50°C und anschließend mit einer Aluminium-, Zirkon- oder Titanverbindung als mineralischem Gerbstoff in einer Menge von 4 bis 16 Gew.%, bezogen auf das Blößengewicht, bei Temperaturen von 20 bis 45°C behandelt, wobei die erste und zweite Stufe miteinander vertauscht sein können.

2. Verfahren nach Anspruch 1, dadurch gekennzeichnet, daß man ein Kondensationsprodukt, erhalten durch Kondensation von 1 Mol Melamin mit 1 bis 8 Mol Glyoxylsäure gegebenenfalls in Form eines Alkalisalzes und/oder 1 bis 8 Mol Glyoxal, wobei die Summe der Mole von Glyoxylsäure und Glyoxal 4 bis 9 beträgt, in wäßriger Lösung bei Temperaturen von 20 bis 100°C, einsetzt.

3. Verfahren nach Anspruch 1, dadurch gekennzeichnet, daß man ein Kondensationsprodukt, erhalten durch Kondensation von 1 Mol Melamin mit 1 bis 5 Mol Glyoxylsäure oder einem Alkalisalz der Glyoxylsäure und 1 bis 5 Mol Glyoxal, wobei die Summe der Mole von Glyoxylsäure oder ihrem Alkalisalz und Glyoxal 5 bis 7 beträgt, in wäßriger Lösung bei Temperaturen von 20 bis 100°C, wobei zuerst die gesamte Menge Glyoxylsäure oder ihr Alkalisalz umgesetzt werden und anschließend unter den gleichen Bedingungen das Glyoxal umgesetzt wird, einsetzt.

4. Verfahren nach einem der Ansprüche 1 bis 3, dadurch gekennzeichnet, daß das eingesetzte Kondensationsprodukt durch Einkondensation von 0,1 bis 3,0 Mol, bezogen auf 1 Mol Melamin, einer Verbindung mit einer phenolischen Hydroxylgruppe, ausgewählt aus der Gruppe bestehend aus Phenolsulfonsäure, Sulfosalicylsäure, Salicylsäure und 8-Hydroxychinolin, oder einer Verbindung mit einer reaktiven stickstoffhaltigen Gruppe, ausgewählt aus der Gruppe, bestehend aus Acetamid, Benzoesäureamid, Formamid, Amidosulfonsäure, Succinimid, Glycin, Iminodiessigsäure, Phenylglycin, Harnstoff, Dicyandiamid, Diethanolamin, Diethylamin, modifiziert ist.

5. Verwendung von Kondensationsprodukten aus Melamin und Glyoxal und/oder Glyoxylsäure gegebenenfalls in Form eines Alkalisalzes und gegebenenfalls einer aromatischen Verbindung mit mindestens einer phenolischen Hydroxylgruppe oder gegebenenfalls einer kondensierbaren Verbindung mit einer reaktiven stickstoffhaltigen Gruppe bei der Gerbung von Leder in wäßrigen Flotten in einer Menge von 4 bis 20 Gew.%, bezogen auf das Blößengewicht, bei Temperaturen von 30 bis 50°C und anschließender Behandlung mit einer Aluminium-, Zirkon- oder Titanverbindung als mineralischem Gerbstoff in einer Menge von 4 bis 16 Gew.%, bezogen auf das Blößengewicht, bei Temperaturen von 20 bis 45°C, wobei die erste und zweite Stufe miteinander vertauscht sein können.

6. Verwendung von Kondensationsprodukten, erhalten durch Kondensation von 1 Mol Melamin mit 1 bis 8 Mol Glyoxylsäure gegebenenfalls in Form eines Alkalisalzes und/oder 1 bis 8 Mol Glyoxal, wobei die Summe der Mole von Glyoxylsäure und Glyoxal 5 bis 7 beträgt, in wäßriger Lösung bei Temperaturen von 20 bis 100°C, bei der Gerbung von Leder nach Anspruch 5.

7. Verwendung von Kondensationsprodukten, erhalten durch Kondensation von 1 Mol Melamin mit 1 bis 5 Mol Glyoxylsäure oder einem Alkalisalz der Glyoxylsäure und 1 bis 5 Mol Glyoxal, wobei die Summe der Mole von Glyoxylsäure oder ihrem Alkalisalz und Glyoxal 5 bis 7 beträgt, in wäßriger Lösung bei Temperaturen von 20 bis 100°C, bei der Gerbung von Leder nach Anspruch 5.

8. Verwendung von Kondensationsprodukten nach einem der Ansprüche 5 bis 7, die durch Einkondensation von 0,1 bis 3,0 Mol, bezogen auf 1 Mol Melamin, einer Verbindung mit einer phenolischen Hydroxylgruppe, ausgewählt aus der Gruppe bestehend aus Phenolsulfonsäure, Sulfosalicylsäure, Salicylsäure und 8-Hydroxychinolin, oder einer Verbindung mit einer reaktiven stickstoffhaltigen Gruppe, ausgewählt aus der Gruppe, bestehend aus Acetamid, Benzoesäureamid, Formamid, Amidosulfonsäure, Succinimid, Glycin, Iminodiessigsäure, Phenylglycin, Harnstoff, Dicyandiamid, Diethanolamin, Diethylamin, modifiziert sind.

9. Kondensationsprodukte aus Melamin, Glyoxylsäure und Glyoxal als Gerbereihilfsmittel, erhalten durch Kondensation von 1 Mol Melamin mit 1 bis 5 Mol Glyoxylsäure oder einem Alkalisalz der Glyoxylsäure und 1 bis 5 Mol Glyoxal, wobei die Summe der Mole von Glyoxylsäure oder ihrem Alkalisalz und Glyoxal 5 bis 7 beträgt, in wäßriger Lösung bei Temperaturen von 20 bis 100°C, wobei zuerst die gesamte Menge Glyoxylsäure oder ihr Alkalisalz umgesetzt werden und anschließend unter den gleichen Bedingungen das Glyoxal umgesetzt wird.

10. Kondensationsprodukte nach Anspruch 9, die durch Einkondensation von 0,1 bis 3,0 Mol, bezogen auf 1 Mol Melamin, einer Verbindung mit einer phenolischen Hydroxylgruppe, ausgewählt aus der Gruppe bestehend aus Phenolsulfonsäure, Sulfosalicylsäure, Salicylsäure und 8-Hydroxychinolin, oder einer Verbindung mit einer reaktiven stickstoffhaltigen Gruppe, ausgewählt aus der Gruppe, bestehend aus Acetamid, Benzoesäureamid, Formamid, Amidosulfonsäure, Succinimid, Glycin, Iminodiessigsäure, Phenylglycin, Harnstoff, Dicyandiamid, Diethanolamin, Diethylamin, modifiziert sind.

11. Kondensationsprodukte nach Anspruch 9, erhalten durch Kondensation von 1 Mol Melamin mit 2 bis 4 Mol Glyoxylsäure oder einem Alkalisalz der Glyoxylsäure und 2 bis 4 Mol Glyoxal, wobei die Summe der Mole von Glyoxylsäure oder ihrem Alkalisalz und Glyoxal 5,5 bis 6,5 beträgt.

12. Kondensationsprodukt nach Anspruch 9, erhalten durch Kondensation aus 1 Mol Melamin, 3 Mol Glyoxylsäure oder ihrem Alkalisalz und 3 Mol Glyoxal.

## Claims

1. A process for tanning a leather in an aqueous liquor, which comprises treating a pickled pelt with a condensation product of melamine and glyoxal and/or glyoxylic acid, if desired in the form of an alkali metal salt thereof, and optionally with an aromatic compound having one or more phenolic hydroxyl groups or optionally with a condensable compound having a reactive nitrogen-containing group in an amount of from 4 to 20% by weight, based on the pelt weight, at from 20 to 50°C and then with an aluminum, zirconium or titanium compound as a mineral tanning agent in an amount of from 4 to 16% by weight, based on the pelt weight, at from 20 to 45°C, the first and second stage being interchangeable.

2. A process as claimed in claim 1, wherein the condensation product used has been obtained by condensing 1 mol of melamine with from 1 to 8 mol of glyoxylic acid, if desired in the form of an alkali metal salt, and/or with from 1 to 8 mol of glyoxal, the total number of moles of glyoxylic acid and glyoxal being from 4 to 9, in aqueous solution at from 20 to 100°C.

3. A process as claimed in claim 1, wherein the condensation product used has been obtained by condensing 1 mol of melamine with from 1 to 5 mol of glyoxylic acid or an alkali metal salt thereof and with from 1 to 5 mol of glyoxal, the total number of moles of glyoxylic acid or alkali metal salt thereof and glyoxal being from 5 to 7, in aqueous solution at from 20 to 100°C, by first converting the total amount of glyoxylic acid or alkali metal salt thereof and then converting the glyoxal under the same conditions.

4. A process as claimed in any of claims 1 to 3, wherein the condensation product used has been modified by cocondensation with from 0.1 to 3.0 mol, based on 1 mol of melamine, of a compound having a phenolic hydroxyl group and selected from the group consisting of phenolsulfonic acid, sulfosalicylic acid, salicylic acid and 8-hydroxyquinoline or of a compound having a reactive nitrogen-containing group and selected from the group consisting of acetamide, benzamide, formamide, sulfamic acid, succinimide, glycine, iminodiacetic acid, phenylglycine, urea, dicyandiamide, diethanolamine and diethylamine.

5. The use of condensation products of melamine and glyoxal and/or glyoxylic acid, if desired in the form of an alkali metal salt, and optionally an aromatic compound having at least one phenolic hydroxyl group or optionally a condensable compound having a reactive nitrogen-containing group in the tanning of leather in aqueous liquors in an amount of from 4 to 20% by weight based on the pelt weight, at from 30 to 50°C and subsequent treatment with an aluminum, zirconium or titanium compound as mineral tanning agent in an amount of from 4 to 16% by weight, based on the pelt weight, at from 20 to 45°C, the first and second stage being interchangeable.

6. The use of condensation products obtained by the condensation of 1 mol of melamine with 1 to 8 mol of glyoxylic acid, if desired in the form of an alkali metal salt, and/or from 1 to 8 mol of glyoxal, the total number of moles of glyoxylic acid and glyoxal being from 5 to 7, in aqueous solution at from 20 to 100°C, in the tanning of leather as set forth in claim 5.

7. The use of condensation products obtained by condensation of 1 mol of melamine with 1 to 5 mol of glyoxylic acid or an alkali metal salt of glyoxylic acid and from 1 to 5 mol of glyoxal, the total number of moles of glyoxylic acid or alkali metal salt thereof and glyoxal being 5 to 7, in aqueous solution at from 20 to 100°C, in the tanning of leather as set forth in claim 5.

8. The use of condensation products as set forth in any of claims 5 to 7, which have been modified by cocondensation with 0.1 to 3.0 mol, based on 1 mol of melamine, of a compound having a phenolic hydroxyl group selected from the group consisting of phenolsulfonic acid, sulfosalicylic acid, salicylic acid and 8-hydroxyquinoline, or of a compound having a reactive nitrogen-containing group selected from the group consisting of acetamide, benzamide, formamide, sulfamic acid, succinimide, glycine, iminodiacetic acid, phenylglycine, urea, dicyandiamide, diethanolamine and diethylamine.

9. A condensation product of melamine, glyoxylic acid and glyoxal for use as a tanning assistant, obtained by condensing 1 mol of melamine with from 1 to 5 mol of glyoxylic acid or an alkali metal salt thereof and with from 1 to 5 mol of glyoxal, the total number of moles of glyoxylic acid or alkali metal salt thereof and glyoxal being from 5 to 7, in aqueous solution at from 20 to 100°C, by first converting the total amount of glyoxylic acid or alkali metal salt thereof and then converting the glyoxal under the same conditions.

10. A condensation product as claimed in claim 9, modified by cocondensation with from 0.1 to 3.0 mol, based on 1 mol of melamine, of a compound having a phenolic hydroxyl group and selected from the group consisting of phenolsulfonic acid, sulfosalicylic acid, salicylic acid and 8-hydroquinoline or of a compound having a reactive nitrogen-containing group and selected from the group consisting of acetamide, benzamide, formamide, sulfamic acid, succinimide, glycine, iminodiacetic acid, phenylglycine, urea, dicyandiamide, diethanolamine and diethylamine.

11. A condensation product as claimed in claim 9, obtained by condensing 1 mol of melamine with from 2 to 4 mol of glyoxylic acid or an alkali metal salt thereof and with from 2 to 4 mol of glyoxal, the total number of moles of glyoxylic acid or alkali metal salt thereof and glyoxal being from 5.5 to 6.5.

12. A condensation product as claimed in claim 9, obtained by condensation of from 1 mol of melamine, 3 mol of glyoxylic acid or an alkali metal salt thereof and 3 mol of glyoxal.

## Revendications

1. Procédé de tannage de cuir en bains aqueux, caractérisé en ce qu'on traite les peaux pelanées et picklées par un produit de condensation de mélamine et de glyoxal et/ou d'acide glyoxylique, éventuellement sous forme d'un sel alcalin, et éventuellement d'un composé aromatique comportant au moins un groupement hydroxy phénolique ou éventuellement d'un composé condensable comportant un groupement azoté réactif, dans une proportion de 4 à 20% en poids par rapport au poids des peaux pelanées, à des températures de 20 à 50°C, puis par un composé de l'aluminium, du zirconium ou du titane en tant que matière tannante minérale, dans une proportion de 4 à 16% en poids par rapport au poids des peaux pelanées et à des températures de 20 à 45°C, les première et seconde étapes pouvant être interverties.

2. Procédé selon la revendication 1, caractérisé en ce qu'on utilise un produit de condensation obtenu par condensation de 1 mole de mélamine avec 1 à 8 moles d'acide glyoxylique, éventuellement sous la forme d'un sel alcalin, et/ou avec 1 à 8 moles de glyoxal, la somme des moles d'acide glyoxylique et de glyoxal étant comprise entre 4 et 9, en solution aqueuse à des températures de 20 à 100°C.

3. Procédé selon la revendication 1, caractérisé en ce qu'on utilise un produit de condensation obtenu par condensation de 1 mole de mélamine avec 1 à 5 moles d'acide glyoxylique ou d'un sel alcalin de l'acide glyoxylique et avec 1 à 5 moles de glyoxal, la somme des moles d'acide glyoxalique ou de son sel alcalin et de glyoxal étant comprise entre 5 et 7, en solution aqueuse à des températures de 20 à 100°C, la quantité totale d'acide glyoxylique ou de son sel alcalin étant d'abord mise en réaction, puis le glyoxal étant mis en réaction dans les mêmes conditions.

4. Procédé selon l'une quelconque des revendications 1 à 3, caractérisé en ce que le produit de condensation utilisé est modifié par introduction, dans la condensation, de 0,1 à 3,0 moles, pour 1 mole de mélamine, d'un composé comportant un groupement hydroxy phénolique, choisi dans le groupe constitué par l'acide phénolsulfonique, d'acide sulfosalicylique, l'acide salicylique et la 8-hydroxyquinoléine, ou d'un composé comportant un groupement azoté réactif, choisi dans le groupe constitué par d'acétamide, le benzamide, le formamide, l'acide amidosulfonique, le succinimide, la glycine, l'acide iminodiacétique, la phénylglycine, l'urée, le dicyandiamide, la diéthanolamine et la diéthylamine.

5. Utilisation de produits de condensation de mélamine et de glyoxal et/ou d'acide glyoxylique, éventuellement sous forme d'un sel alcalin, et éventuellement d'un composé aromatique comportant au moins un groupement hydroxy phénolique ou éventuellement d'un composé condensable comportant un groupement azoté réactif, dans le tannage de cuir en bains aqueux, dans une proportion de 4 à 20% en poids par rapport au poids de peaux pelanées, à des températures de 30 à 50°C, suivie de traitement par un composé de l'aluminium, du zirconium ou du titane en tant que matière tannante minérale, dans une proportion de 4 à 16% en poids par rapport au poids des peaux pelanées et à des températures de 20 à 45°C, les première et seconde étapes pouvant être interverties.

6. Utilisation de produits de condensation obtenus par condensation de 1 mole de mélamine avec 1 à 8 moles d'acide glyoxylique, éventuellement sous la forme d'un sel alcalin, et/ou avec 1 à 8 moles de glyoxal, la somme des moles d'acide glyoxylique et de glyoxal étant comprise entre 5 et 7, en solution aqueuse à des températures de 20 à 100°C, dans le tannage de cuir selon la revendication 5.

7. Utilisation de produits de condensation obtenus par condensation de 1 mole de mélamine avec 1 à 5 moles d'acide glyoxylique ou d'un sel alcalin de l'acide glyoxylique et avec 1 à 5 moles de glyoxal, la somme des moles d'acide glyoxalique ou de son sel alcalin et de glyoxal étant comprise entre 5 et 7, en solution aqueuse à des températures de 20 à 100°C, dans le tannage de cuir selon la revendication 5.

8. Utilisation de produits de condensation selon l'une quelconque des revendication 5 à 7, qui sont modifiés par introduction, dans la condensation, de 0,1 à 3,0 moles, pour 1 mole de mélamine, d'un composé comportant un groupement hydroxy phénolique, choisi dans le groupe constitué par l'acide phénolsulfonique, l'acide sulfosalicylique, l'acide salicylique et la 8-hydroxyquinoléine, ou d'un composé comportant un groupement azoté réactif, choisi dans le groupe constitué par l'acétamide, le benzamide, le formamide, l'acide amidosulfonique, le succinimide, la glycine, l'acide iminodiacétique, la phénylglycine, l'urée, le dicyandiamide, la diéthanolamine et la diéthylamine.

9. Produits de condensation de mélamine, d'acide glyoxylique et de glyoxal servant de produits auxiliaires pour l'industrie du tannage, obtenus par condensation de 1 mole de mélamine avec 1 à 5 moles d'acide glyoxylique ou d'un sel alcalin de l'acide glyoxylique et avec 1 à 5 moles de glyoxal, la somme des moles d'acide glyoxalique ou de son sel alcalin et de glyoxal étant comprise entre 5 et 7, en solution aqueuse à des températures de 20 à 100°C, la quantité totale d'acide glyoxylique ou de son sel alcalin étant d'abord mise en réaction, puis le glyoxal étant mis en réaction dans les mêmes conditions.

10. Produits de condensation selon la revendication 9 qui sont modifiés par introduction, dans la condensation, de 0,1 à 3,0 moles, pour 1 mole de mélamine, d'un composé comportant un groupement hydroxy phénolique, choisi dans le groupe constitué par l'acide phénolsulfonique, l'acide sulfosalicylique, l'acide salicylique et la 8-hydroxyquinoléine, ou d'un composé comportant un groupement azoté réactif, choisi dans le groupe constitué par l'acétamide, le benzamide, le formamide, l'acide amidosulfonique, le succinimide, la glycine, l'acide iminodiacétique, la phénylglycine, l'urée, le dicyandiamide, la diéthanolamine et la diéthylamine.

11. Produits de condensation selon la revendication 9, obtenus par condensation de 1 mole de mélamine avec 2 à 4 moles d'acide glyoxylique ou d'un sel alcalin de l'acide glyoxylique et avec 2 à 4 moles de glyoxal, la somme des moles d'acide glyoxylique ou de son sel alcalin et de glyoxal étant comprise entre 5,5 et 6,5.

12. Produit de condensation selon la revendication 9, obtenu par condensation à partir de 1 mole de mélamine, de 3 moles d'acide glyoxylique ou de son sel alcalin et de 3 moles de glyoxal.
